# EUROPÄISCHE PATENTANMELDUNG

(11) **EP 4 454 878 A1**
(43) Veröffentlichungstag der Anmeldung: **30.10.2024**
(21) Anmeldenummer: 24171543.2
(22) Anmeldetag: 22.04.2024
(51) Int. Cl.: B32B 3/02, B32B 3/04, B32B 3/08, B32B 3/12, B32B 5/18, B32B 7/12

(54) **SANDWICHPLATTE MIT SCHUTZKANTE**

(30) Priorität: 24.04.2023 DE 102023110372
(71) Anmelder: Elbe Flugzeugwerke GmbH, 01109 Dresden (DE)
(72) Erfinder: Lang, Matthias, Dresden (DE); Herrmann, Jens, Dresden (DE); Kehrer, Jens, Dresden (DE); Hertel, Martin, Dresden (DE)
(74) Vertreter: LKGLOBAL Lorenz & Kopf Patentanwalt Attorney at Law PartG mbB

(57) **Zusammenfassung**

Eine Sandwichplattenanordnung (10) weist eine Sandwichplatte (100) und eine Schutzkante (150) auf. Die Sandwichplatte (100 weist eine erste Deckschicht (110), eine zweite Deckschicht (120) und eine Kernschicht (130) auf. Die Kernschicht (130) ist zwischen beiden Deckschichten angeordnet und mit beiden Deckschichten verbunden. Die Sandwichplatte (100) ist von einer umlaufenden Außenkante (105) und einer die Außenkante (105) bildenden Seitenfläche begrenzt. Die Schutzkante (150) ist an der ersten Deckschicht (110) befestigt und erstreckt sich in einer Umfangsrichtung (102) der Sandwichplatte (100) entlang mindestens eines Abschnitts der Seitenfläche und deckt dadurch die die Außenkante (105) bildende Seitenkante mindestens teilweise gegen einen Zugang von außen ab.

## Beschreibung

### Technisches Gebiet

Die vorliegende Beschreibung bezieht sich im Allgemeinen auf Leichtbautechnologie, und insbesondere auf den Aufbau einer Sandwichplattenanordnung mit einer Sandwichplatte und einer Schutzkante.

### Technischer Hintergrund

Sandwichplatten werden bevorzugt im Leichtbau verwendet, weil sich Sandwichplatten bei einem vergleichsweise niedrigen Gewicht durch eine hohe mechanische Festigkeit und Widerstandsfähigkeit gegen äußere Belastungen auszeichnen. Sandwichplatten weisen zwei Deckschichten und eine dazwischen angeordnete Kernschicht auf. Bedingt durch die Bauweise werden Sandwichplatten üblicherweise als flache bzw. ebene Elemente gefertigt. Oftmals werden Sandwichplatten auf ein vorgegebenes Maß oder eine vorgegebene Form gefertigt bzw. zurechtgeschnitten, um dann mit diesem Maß bzw. dieser Form in dem vorgesehenen Verwendungsumfeld montiert zu werden.

Sandwichplatten können beispielsweise benutzt werden, um in einem Raum als Paneele an den Wänden montiert zu werden und dadurch die Wände oder an den Wänden montierte Gegenstände und Vorrichtungen zu schützen. In einem solchen Szenario können allerdings die Sandwichplatten äußeren Einflüssen ausgesetzt sein, welche zu einer Beschädigung der Sandwichplatten führen können.

Dennoch werden Sandwichplatten bevorzugt für solche Zwecke eingesetzt, weil sie ein niedriges Gewicht und dabei eine vergleichsweise hohe Festigkeit haben. So werden Sandwichplatten insbesondere in Fahrzeugen, beispielsweise in einem Frachtraum von Flugzeugen, als Schutzplatten verwendet. Mit zunehmender Einsatzdauer sind die Sandwichplatten jedoch einer hohen Belastung ausgesetzt, so dass sich insbesondere im Bereich der Kanten der Sandwichplatten Beschädigungen anhäufen, welche die strukturelle Integrität einer Sandwichplatte und damit ihre Belastbarkeit beeinträchtigen.

Bei einer Sandwichplatte droht insbesondere eine sogenannte Delamination, bei der sich eine Deckschicht von der Kernschicht löst und somit ein Großteil der vorteilhaften Eigenschaften einer Sandwichplatte verloren gehen.

### Beschreibung

Es kann daher als Aufgabe der Erfindung angesehen werden, eine Sandwichplatte für den Einsatz in einer rauen Umgebung mit auf die Sandwichplatte wirkenden äußeren Lasten zu modifizieren.

Diese Aufgabe wird durch den Gegenstand des unabhängigen Anspruchs gelöst. Weitere Ausführungsformen ergeben sich aus den abhängigen Ansprüchen sowie aus der folgenden Beschreibung.

Eine Sandwichplattenanordnung weist eine Sandwichplatte und eine Schutzkante auf. Die Sandwichplatte weist eine erste Deckschicht, eine zweite Deckschicht, und eine zwischen der ersten Deckschicht und der zweiten Deckschicht angeordnete und mit der ersten Deckschicht und der zweiten Deckschicht verbundene Kernschicht auf. Die Sandwichplatte ist von einer umlaufenden Außenkante und einer die Außenkante bildenden Seitenfläche begrenzt. Die Schutzkante ist an der ersten Deckschicht befestigt und erstreckt sich in einer Umfangsrichtung der Sandwichplatte entlang mindestens eines Abschnitts der Seitenfläche und deckt dadurch die die Außenkante bildende Seitenkante mindestens teilweise gegen einen Zugang von außen ab. Die Schutzkante weist einen ersten Schenkel und einen zweiten Schenkel auf, wobei der erste Schenkel über einen Biegeradius in den zweiten Schenkel übergeht, wobei der erste Schenkel in einem Überlappbereich auf der ersten Deckschicht flächig aufliegt, und wobei der zweite Schenkel sich entlang der die Außenkante bildenden Seitenfläche erstreckt. Die Sandwichplatte weist an der Außenkante eine Schräge auf, welche ausgehend von der ersten Deckschicht nahe dem Biegeradius gebildet ist.

Eine Sandwichplatte besteht allgemein aus zwei Deckschichten und einem zwischen den beiden Deckschichten angeordneten Kern bzw. einer Kernschicht.

Jede Deckschicht kann dabei aus mehreren Lagen oder Schichten bestehen. Die Deckschichten werden an gegenüberliegenden Flächen der Kernschicht mit der Kernschicht verbunden, beispielsweise verklebt. Jede Deckschicht enthält eine oder mehrere Schichten. Die Deckschichten sind aus stabilen Materialen mit im Vergleich zu der Kernschicht höherer Dichte gebildet. Für die Deckschichten können Materialien wie beispielsweise Holz, Kunststoffe oder verschiedene Laminate verwendet werden. Beispielsweise sind die Deckschichten aus getränktem Fasergeflecht (in verwebter oder gleichlaufender Struktur oder einer Kombination hiervon) gefertigt. Jede Schicht einer Deckschicht kann beispielsweise eine Glasfaserschicht oder Kohlefaserschicht oder ein metallisches Gelege enthalten. Die Fasern oder das metallische Gelege können in eine duroplastische Matrix eingebracht sein und somit eine Schicht der Deckschicht bilden. Beispielsweise ist das Fasergeflecht in Phenolharz getränkt.

Die Kernschicht besteht aus einem Material mit einer im Vergleich zu den Deckschichten deutlich niedrigeren Dichte. Die Dichte der Kernschicht beruht vorliegend auf deren Masse sowie deren Volumen in dem in der Sandwichplatte verbauten Zustand. Um diese vergleichsweise niedrige Dichte zu erreichen, enthält die Kernschicht typischerweise Hohlräume. Beispielsweise enthält die Kernschicht einen Schaumkern oder einen Wabenkern.

Schaumkerne bestehen beispielsweise aus PVC-Schaumstoff (Polyvinylchlorid-Schaumstoff), PET-Schaumstoff (Polyethylenterephthalat-Schaumstoff) oder jedem anderen geeigneten Schaumstoff. PET-Schaum weist eine hohe mechanische Festigkeit auf und ist deshalb gut geeignet, um Drucklasten aufzunehmen. Zudem weist PET-Schaum eine hohe Schubfestigkeit und Schubbruchdehnung auf und ist leicht.

Wabenkerne weisen mehrere Waben auf und bestehen beispielsweise aus Kunststoffen, Pappen oder anderen geeigneten Materialen mit den benötigten Eigenschaften. Ein Wabenkern enthält eine Wabenstruktur, die aus verschiedenen Kunststoffen, Pappen oder anderen geeigneten Materialien aufgebaut ist. Der Wabenkern ist so geformt, dass er eine maximale Stabilität bei gleichzeitig geringem Gewicht hat.

Die Stabilität der Kernschicht kann lokal verstärkt werden, indem die Hohlräume in der Kernschicht an vorgegebenen Stellen mit einer Kernfüllmasse gefüllt werden. Die Kernfüllmasse wird üblicherweise in die Hohlräume eingebracht, bevor die Deckschichten an gegenüberliegenden Flächen der Kernschicht befestigt werden. Als Kernfüllmasse können beispielsweise Blähglas, Blähton oder andere geeignete Füllstoffe verwendet werden.

Es können für die Kernschicht allerdings auch andere Leichtbaustoffe, wie beispielsweise Kork, verwendet werden.

Die stabilen Deckschichten verteilen Drucklasten senkrecht zu der Flächennormale der Sandwichplatte gleichmäßig auf die leichte Kernschicht, wodurch die Kernschicht in der Lage ist, die Drucklasten aufzunehmen. Außerdem werden Schublasten beim Biegen der Sandwichplatten von dem leichten Material der Kernschicht gut aufgenommen. Die Deckschichten hingegen widerstehen Zug- und Drucklasten in der Plattenebene.

Dieser Aufbau führt zu ausgezeichneter Stabilität der Sandwichplatten bei gleichzeitig geringem Gewicht.

Die hier beschriebene Sandwichplattenanordnung zeichnet sich dadurch aus, dass eine Schutzkante die Sandwichplatte vor Beschädigung, insbesondere Delamination, durch von außen wirkende Kräfte schützt. Als Delamination bezeichnet man bei einer Sandwichplatte den Vorgang, wenn sich eine Deckschicht von der Kernschicht mindestens teilweise löst. Die Gefahr einer Beschädigung der Sandwichplatte droht insbesondere in Umgebungen, wo Kräfte und Lasten auf die Kanten der Sandwichplatte wirken, beispielsweise wenn die Sandwichplatte in einem Frachtraum eines Fahrzeugs als Paneel oder Wandelement mit freiliegenden Kanten verwendet wird.

Die Schutzkante kann sich in Umfangsrichtung um den gesamten Umfang der Sandwichplatte erstrecken, also entlang der gesamten Außenkante. Es ist allerdings auch denkbar, dass die Schutzkante sich lediglich entlang eines Teils bzw. eines Abschnitts der Außenkante erstreckt, beispielsweise weil die Sandwichplatte nicht über den gesamten Umfang dem Risiko einer Beschädigung der Außenkante ausgesetzt ist.

Die Schutzkante ist an einer Deckschicht der Sandwichplatte befestigt, weil die Deckschicht sich durch eine im Vergleich zu der Kernschicht höhere Festigkeit auszeichnet.

Die Schutzkante weist einen ersten Schenkel und einen zweiten Schenkel auf, wobei der erste Schenkel über einen Biegeradius in den zweiten Schenkel übergeht, wobei der erste Schenkel in einem Überlappbereich auf der ersten Deckschicht flächig aufliegt, und wobei der zweite Schenkel sich entlang der die Außenkante bildenden Seitenfläche erstreckt.

Der Überlappbereich erstreckt sich auf der ersten Deckschicht von der Außenkante nach innen (also weg von der Außenkante) und die Schutzkante liegt in diesem Überlappbereich auf der Deckschicht auf.

Die Schutzkante kann beispielsweise L-förmig sein, so dass der erste Schenkel in einem im Wesentlichen rechten Winkel relativ zu dem zweiten Schenkel angeordnet ist. Der erste Schenkel liegt auf der ersten Deckschicht auf und ist mit dieser verbunden und der zweite Schenkel verdeckt die die Außenkante bildende Seitenfläche der Sandwichplatte.

Die Schutzkante kann aber auch U-förmig oder C-förmig sein, wobei die Schutzkante in diesem Fall zwei einander gegenüberliegende Schenkel und einen Querschenkel aufweist und die einander gegenüberliegenden Schenkel jeweils an einer Deckschicht der Sandwichplatte aufliegen und der Querschenkel die die Außenkante bildende Seitenfläche bedeckt und gegen Beschädigung schützt. In diesem Fall ist der erste Schenkel einer der beiden gegenüberliegenden Schenkel und der zweite Schenkel ist der Querschenkel.

Gemäß einer weiteren Ausführungsform ist der erste Schenkel in dem Überlappbereich mit der ersten Deckschicht verklebt.

Gemäß einer weiteren Ausführungsform erstreckt sich der zweite Schenkel in einer Erstreckungsrichtung von der ersten Deckschicht zu der zweiten Deckschicht und eine Länge des zweiten Schenkels in dieser Erstreckungsrichtung ist geringer als ein Abstand zwischen der ersten Deckschicht und der zweiten Deckschicht.

Dies bedeutet, dass der zweite Schenkel der Schutzkante in der Erstreckungsrichtung von der ersten Deckschicht zu der zweiten Deckschicht eine geringere Höhe hat als die Kernschicht, welche sich zwischen der ersten Deckschicht und der zweiten Deckschicht befindet. Der zweite Schenkel ist somit im Vergleich zu der Position der zweiten Deckschicht verkürzt.

Gemäß einer weiteren Ausführungsform ist der zweite Schenkel um einen lateralen Abstand von der die Außenkante bildenden Seitenfläche beabstandet.

Dieser laterale Abstand kann dazu dienen, Fertigungstoleranzen aufzufangen.

Die Sandwichplatte weist an der Außenkante eine Schräge auf, welche ausgehend von der ersten Deckschicht nahe dem Biegeradius gebildet ist.

Beispielsweise verläuft die Schräge ausgehend von der ersten Deckschicht, an welcher der erste Schenkel der Schutzkante befestigt ist, in die Kernschicht hinein in Richtung der zweiten Deckschicht. Die Schräge erstreckt sich bevorzugt nicht bis zu der zweiten Deckschicht, sondern endet vielmehr in etwa mittig zwischen der ersten Deckschicht und der zweiten Deckschicht.

Die Schräge dient dazu, ein Gegenstück für den Biegeradius zwischen dem ersten Schenkel und dem zweiten Schenkel zu bilden, damit die Schutzkante auf der ersten Deckschicht aufliegen kann, ohne dass der Biegeradius einen ungewünschten Abstand zwischen Schutzkante und erster Deckschicht schafft. In anderen Worten liegt die Schräge dem Biegeradius gegenüber bzw. die Schräge bietet Platz, damit durch die Schräge einen Platz freigibt bzw. Material von der Sandwichplatte abgetragen wird, und der Biegeradius durch diesen freigegebenen Platz verläuft.

Gemäß einer weiteren Ausführungsform weist die Sandwichplatte einen verstärkten Endbereich auf, wobei der verstärkte Endbereich sich ausgehend von der Außenkante in die Sandwichplatte erstreckt, wobei der Überlappbereich zwischen dem ersten Schenkel und der ersten Deckschicht den verstärkten Endbereich teilweise oder vollständig überlappt.

In dem verstärkten Endbereich sind beispielsweise Hohlräume in der Kernschicht mit einer Kernfüllmasse gefüllt, um die Festigkeit der Kernschicht und damit der Sandwichplatte in diesem Bereich zu erhöhen. Somit können auf die Schutzkante wirkende Kräfte besser aufgenommen werden.

Gemäß einer weiteren Ausführungsform weist die Sandwichplatte in dem verstärkten Endbereich ein Sackloch auf, wobei das Sackloch sich ausgehend von der zweiten Deckschicht in die Kernschicht erstreckt, wobei ein Insert in dem Sackloch angeordnet und befestigt ist.

Das Sackloch bildet eine Vertiefung in der Sandwichplatte. In dem Sackloch ist ein Insert angeordnet und darin verklebt. Das Insert wird in die Sandwichplatte ausgehend von der zweiten Deckschicht eingesetzt, und damit von derjenigen Deckschicht, welche der mit dem ersten Schenkel der Schutzkante verbundenen Deckschicht gegenüberliegt. In anderen Worten ist das Insert auf einer der Schutzkante gegenüberliegenden Oberfläche der Sandwichplatte eingebracht und ermöglicht es, dass die Sandwichplattenanordnung mithilfe des Inserts an einem vorgesehenen Montageort befestigt werden kann.

Das Sackloch ist nahe der Außenkante der Sandwichplatte positioniert, allerdings so, dass zwischen dem Sackloch und der Außenkante immer noch ein Teil des verstärkten Endbereichs liegt. Besonders bevorzugt ist das Sackloch von dem verstärkten Endbereich vollständig umgeben und ist lediglich ausgehend von der zweiten Deckschicht zugänglich. Bevor das Insert in das Sackloch eingesetzt wird, wird das Sackloch beispielsweise mit Klebstoff befüllt und dann das Insert eingesetzt.

Gemäß einer weiteren Ausführungsform weist die Schutzkante ein metallisches Material oder einen Kunststoff auf.

Die Schutzkante kann beispielsweise aus Aluminium oder Stahl sowie anderen geeigneten metallischen Legierungen gefertigt sein. Die Schutzkante kann auch

Beschichtungen aufweisen. Es ist auch denkbar, dass die Schutzkante aus einem metallischen Grundmaterial besteht, welches stellenweise mit Kunststoff ergänzt ist.

Gemäß einer weiteren Ausführungsform ist die Schutzkante einstückig ausgestaltet.

Die Schutzkante kann beispielsweise aus einem Blech auf das gewünschte Maß geschnitten werden. Anschließend wird die Schutzkante in die gewünschte Form gebracht, beispielsweise durch einen Biegevorgang, in welchem die Schenkel in die gewünschte relative Anordnung zueinander gebracht werden.

Besteht die Schutzkante aus Kunststoff, kann die Schutzkante bereits in ihre vorgesehene Form gegossen oder durch einen Umformungsvorgang hergestellt werden.

Es ist aber auch denkbar, dass die Schutzkante aus mehreren Abschnitten besteht, welche getrennt voneinander hergestellt und anschließend miteinander verbunden (beispielsweise verschweißt, verklebt, gelötet) werden, bevor die Schutzkante an die Sandwichplatte angebracht wird.

Die Sandwichplatte und die Schutzkante können getrennt voneinander hergestellt werden. So kann beispielsweise die Sandwichplatte zunächst aus einem Rohling auf das gewünschte Maß geschnitten werden. Die Schutzkante kann unabhängig von dem Herstellungsvorgang der Sandwichplatte aus dem gewünschten Material gefertigt und in Form gebracht werden. Sodann wird die Schutzkante an die Sandwichplatte angesetzt und damit verbunden.

Bevorzugt und ohne darauf beschränkt zu sein ist die Schutzkante in ihrem Querschnitt L-förmig. Eine Schutzkante mit einer solchen Querschnittsform kann in einem auf das endgültige Maß und in die endgültige Form gebrachten Zustand einseitig auf die Sandwichplatte aufgesetzt und mit einer Deckschicht der Sandwichplatte verklebt werden.

Es ist aber auch denkbar, dass die Schutzkante eine andere Querschnittsform hat. Beispielsweise kann die Schutzkante zwei gegenüberliegende Schenkel aufweisen, welche an beiden Deckschichten anliegen und die Kernschicht von einem Querschenkel geschützt wird. Eine solche Schutzkante hat ganz allgemein gesprochen eine U-förmige oder C-förmige Querschnittsform. Eine U-förmige oder C-förmige Querschnittsform kann auch gebildet werden, in dem auf beide gegenüberliegende Deckschichten der Sandwichplatte eine L-förmige Schutzkante aufgesetzt wird.

### Kurze Beschreibung der Zeichnungen

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine Profilansicht einer Sandwichplatte.
- Fig. 2: eine Draufsicht und eine Seitenansicht einer Kernschicht.
- Fig. 3: eine schematische Darstellung einer Sandwichplattenanordnung.
- Fig. 4: einen Querschnitt einer Sandwichplattenanordnung mit einer Sandwichplatte und einer Schutzkante.
- Fig. 5: eine schematische Darstellung einer L-förmigen Schutzkante.

- Fig. 6: eine schematische Darstellung einer Sandwichplattenanordnung mit zwei an gegenüberliegenden Deckschichten angebrachten L-förmigen Schutzkanten.

### Detaillierte Beschreibung

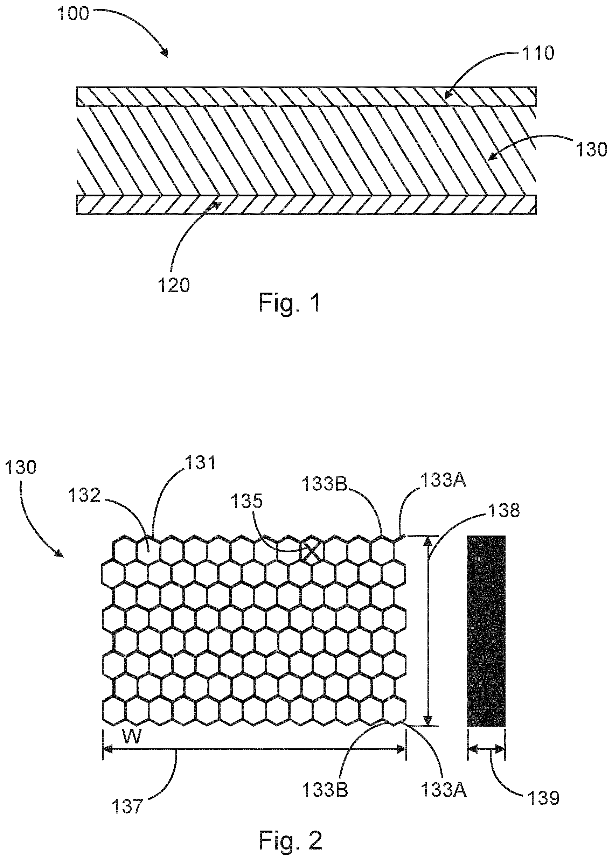

Fig. 1 zeigt in einer Profilansicht bzw. seitlichen Schnittansicht den grundsätzlichen Aufbau einer Sandwichplatte 100. Die Sandwichplatte 100 weist eine erste Deckschicht 110 und eine zweite Deckschicht 120 auf. Zwischen der ersten Deckschicht 110 und der zweiten Deckschicht 120 ist eine Kernschicht 130 angeordnet. Die Kernschicht 130 ist als Schaumkern oder Wabenkern ausgestaltet und enthält mehrere von dem Material der Kernschicht 130 mindestens teilweise umschlossene Hohlräume 132 (siehe Fig. 2). Die erste Deckschicht 110 und die zweite Deckschicht 120 sind aus einem Laminat gefertigt, beispielsweise in Phenolharz getränktem Fasergeflecht. Die Deckschichten können aber auch aus allen anderen geeigneten Materialien bestehen. Beispielsweise sind die Deckschichten 110, 120 mit der Kernschicht 130 verklebt, um die Sandwichplatte 100 zu bilden.

Fig. 2 zeigt beispielhaft den Aufbau eines Wabenkerns 130. Der Wabenkern 130 besteht aus einer Mehrzahl von Waben 131, wobei jede Wabe 131 einen Hohlraum 132 definiert. Der Hohlraum 132 ist von Material des Wabenkerns 130 mindestens teilweise umschlossen.

Der Wabenkern 130 ist in einer Draufsicht (links) und einer Seitenansicht (rechts) gezeigt. Entsprechend wird die Dimension des Wabenkerns 130 durch seine Breite/Weite 137, Länge 138 und Höhe 139 definiert.

Ein Wabenkern 130 besteht aus mehreren Streifen 133A, 133B. Benachbarte Streifen sind punktuell oder abschnittsweise miteinander verbunden, beispielsweise verklebt. Die Streifen 133A, 133B erstrecken sich in Richtung der Länge 138 des Wabenkerns 130.

Sobald die punktuelle oder abschnittsweise Verbindung zwischen benachbarten Streifen in einem Fertigungsvorgang die geforderte Festigkeit hat, wird der Wabenkern expandiert, indem der Wabenkern 130 quer zu der Erstreckungsrichtung der Streifen 133A, 133B expandiert wird. In anderen Worten wird der Wabenkern 130 in Richtung der Breite 137 expandiert, weshalb die Breitenrichtung auch als Expansionsrichtung W bezeichnet wird.

Wie bereits weiter oben beschrieben, können die Hohlräume 132 des Wabenkerns 130 mit einer Kernfüllmasse 135 gefüllt werden, um den Wabenkern 130 und somit die Sandwichplatte 100 lokal zu verstärken.

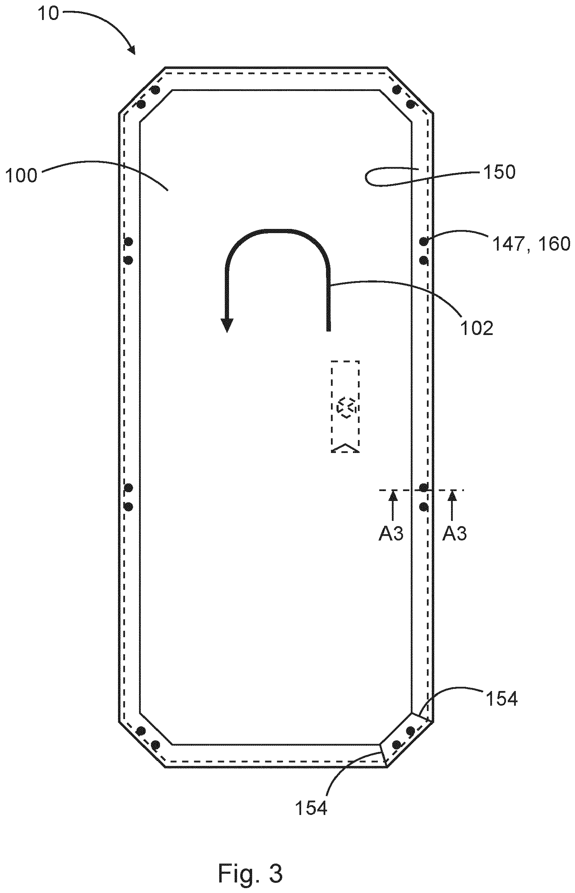

Fig. 3 zeigt eine Sandwichplattenanordnung 10 mit einer Sandwichplatte 100 Schutzkante 150. In diesem Beispiel ist die Schutzkante 150 entlang des gesamten Umfangs der Sandwichplatte 100 in Umfangsrichtung 102 angeordnet und deckt eine Außenkante der Sandwichplatte über den gesamten Umfang ab.

Ebenfalls gezeigt sind mehrere Sacklöcher 147, in welchen jeweils ein Insert 160 angeordnet ist. Die Sacklöcher 147 und die Inserts 160 sind jedoch auf der Rückseite der Sandwichplatte 100 angeordnet, wohingegen die Schutzkante 150 auf der sichtbaren Vorderseite der Sandwichplatte 100 angeordnet ist.

Die Schutzkante 150 kann einstückig ausgestaltet sein. Allerdings kann die Schutzkante 150 auch aus mehreren miteinander verbundenen Abschnitten zusammengesetzt sein. So ist es denkbar, dass die Schutzkante 150 aus mehreren Schutzkantenabschnitten zusammengesetzt wird, welche beispielsweise miteinander verschweißt werden, wie es beispielsweise an der Verbindung 154 gezeigt ist. Die Schutzkante kann aus mehreren geradlinigen Abschnitten zusammengesetzt sein. Die einzelnen geradlinigen Abschnitte können unter einem geforderten Winkel miteinander verbunden werden, damit die Schutzkante 150 dem Verlauf der Außenkante der Sandwichplatte folgt.

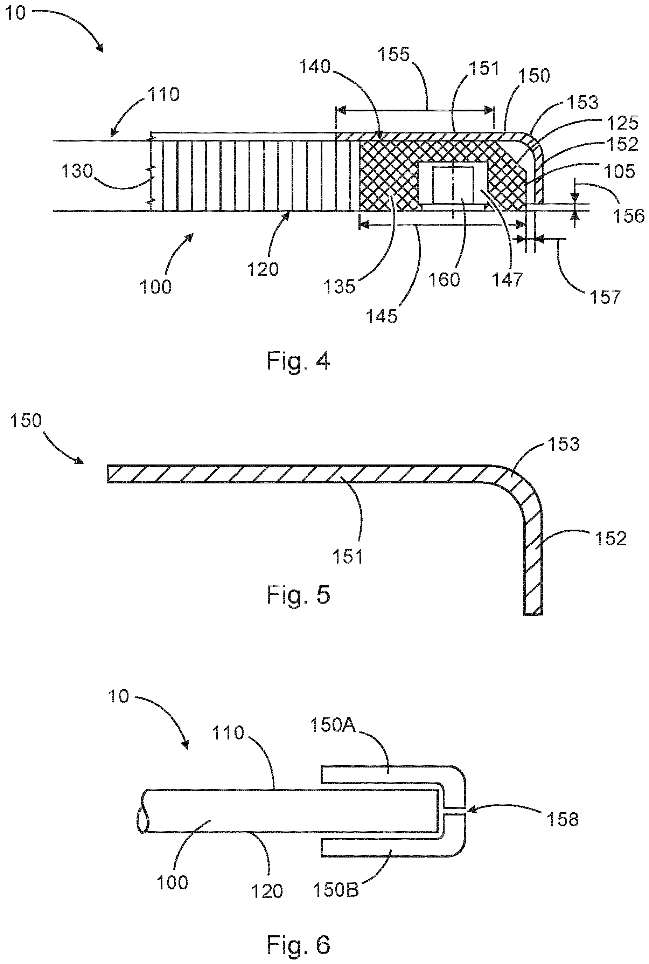

Fig. 4 zeigt einen Querschnitt A3-A3 der Sandwichplattenanordnung 10 aus Fig. 3. Dieser Darstellung kann zunächst der grundsätzliche Aufbau der Sandwichplatte 100, wie er bereits in Fig. 1 gezeigt und mit Bezug dazu beschrieben ist, entnommen werden. Die Deckschichten 110, 120 ragen in dieser schematischen Darstellung über die Kernschicht 130 nach links hinaus. Es ist jedoch zu verstehen, dass diese Darstellung lediglich zu Zwecken der besseren Veranschaulichung gewählt worden ist.

Die Schutzkante 150 ist in dem Querschnitt der Fig. 4 L-förmig und der erste Schenkel 151 liegt flächig auf der ersten Deckschicht 110 auf und ist hier mit einem Klebstoff 140 verklebt. Der erste Schenkel 151 überlappt die erste Deckschicht 110 in einem Überlappbereich 155.

Der erste Schenkel 151 geht über einen Biegeradius 153 in den zweiten Schenkel 152 über. Der zweite Schenkel 152 erstreckt sich in Richtung der zweiten Deckschicht 120 und entlang der Außenkante 105 der Sandwichplatte 100. In diesem Beispiel erstreckt sich der zweite Schenkel 152 nicht über die gesamte Höhe 139 der Kernschicht 130. Vielmehr ist der zweite Schenkel 152 um eine Länge 156 bezogen auf die Höhe der Kernschicht 130 verkürzt. In anderen Worten ist das Ende des zweiten Schenkels 152 bezogen auf die zweite Deckschicht 120 zurückgesetzt.

Weiterhin ist der zweite Schenkel 152 um einen lateralen Abstand 157 von der Außenkante 105 der Sandwichplatte 100 beabstandet.

Die Sandwichplatte 100 weist eine Schräge 125 auf, welche sich ausgehend von der ersten Deckschicht 110 in Richtung der zweiten Deckschicht 120 und in die Kernschicht 130 hinein erstreckt. Die Schräge 125 bietet Platz für den Biegeradius 153, damit der erste Schenkel 151 die erste Deckschicht 110 flächig kontaktieren kann.

Die Sandwichplatte 100 weist einen verstärkten Endbereich 145 auf, in welchem die Hohlräume der Kernschicht 130 mit Kernfüllmasse 135 gefüllt sind. Der verstärkte Endbereich 145 erstreckt sich von der Außenkante 105 in das Innere der Sandwichplatte 100, also in Richtung 137 bzw. 138 gemäß der Darstellung in Fig. 2. In dem verstärkten Endbereich 145 sind die Hohlräume der Kernschicht 130 teilweise oder vollständig mit Kernfüllmasse 135 gefüllt.

Der Überlappbereich 155 kann sich ausgehend von der Außenkante 105 weiter weg von der Außenkante 105 erstrecken als der verstärkte Endbereich 145.

Der Hohlraum zwischen der Sandwichplatte 100 und der Schutzkante 150, also das Volumen zwischen der Außenkante 105 sowie der Schräge 125 und der Schutzkante, kann mit einer Füllmasse gefüllt sein, um zu verhindern, dass sich Gegenstände an der Schutzkante verhaken.

Ausgehend von der zweiten Deckschicht 120 ist in dem verstärkten Endbereich 145 ein Sackloch 147 in der Sandwichplatte 100 positioniert. Das Sackloch erstreckt sich nicht über die gesamte Höhe der Kernschicht und der Boden des Sacklochs ist von der ersten Deckschicht 110 beabstandet. In dem Sackloch 147 ist das Insert 160 eingesetzt und mit Klebstoff darin befestigt. Das Insert 160 kann verwendet werden, um die Sandwichplattenanordnung 10 an einem Montageplatz zu montieren. Beispielsweise ermöglicht es das Insert 160, dass eine Verbindung zu dem Montageplatz hergestellt wird, zum Beispiel über eine Schraube.

Fig. 5 zeigt eine schematische Darstellung der Querschnittsform einer Schutzkante 150. In diesem Beispiel ist die Schutzkante 150 L-förmig und weist, wie in Fig. 4 bereits gezeigt, einen ersten Schenkel 151, welcher über den Biegeradius 153 in den zweiten Schenkel 152 übergeht.

Fig. 6 zeigt eine schematische Darstellung einer Sandwichanordnung 10, in welcher die Sandwichplatte 100 mit einer zweiteiligen Schutzkante geschützt ist, wobei hier zwei spiegelsymmetrisch angeordnete L-förmige Schutzkanten 150A, 150B an einer Außenkante der Sandwichplatte angeordnet sind. Die erste Schutzkante 150A ist an der ersten Deckschicht 110 angeordnet und die zweite Schutzkante 150B ist an der zweiten Deckschicht 120 angeordnet. Die beiden Schutzkanten 150A, 150B berühren einander in dem Kontaktbereich 158 oder sind in diesem Kontaktbereich 158 einige Millimeter voneinander entfernt.

Die Variante in Fig. 6 entspricht in dem montierten Zustand, wie er gezeigt ist, im Wesentlichen einer U-förmigen Schutzkante, welche aus zwei Halbschalen gefertigt ist. Es ist aber auch denkbar, eine U-förmigen Schutzkante einteilig herzustellen und auf die zu schützende Außenkante einer Sandwichplatte aufzusetzen oder aufzuschieben.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Sandwichplattenanordnung
- 100: Sandwichplatte
- 102: Umfangsrichtung
- 105: Seitenfläche, Außenkante
- 110: erste Deckschicht
- 120: zweite Deckschicht
- 125: Schräge
- 130: Kernschicht
- 131: Wabe
- 132: Hohlraum
- 133: Streifen
- 135: Kernfüllmasse
- 137: Breite/Weite
- 138: Länge
- 139: Höhe
- 140: Klebstoff
- 145: verstärkter Endbereich
- 147: Sackloch
- 150: Schutzkante
- 151: erster Schenkel
- 152: zweiter Schenkel
- 153: Biegeradius
- 154: Verbindung
- 155: Überlappbereich
- 156: Verkürzung
- 157: lateraler Abstand
- 158: Kontaktbereich
- 160: Insert

## Patentansprüche

1. Sandwichplattenanordnung (10), aufweisend:
eine Sandwichplatte (100) und eine Schutzkante (150);
wobei die Sandwichplatte (100) eine erste Deckschicht (110), eine zweite Deckschicht (120), und eine zwischen der ersten Deckschicht (110) und der zweiten Deckschicht (120) angeordnete und mit der ersten Deckschicht (110) und der zweiten Deckschicht (120) verbundene Kernschicht (130) aufweist, und wobei die Sandwichplatte (100) von einer umlaufenden Außenkante (105) und einer die Außenkante (105) bildenden Seitenfläche begrenzt ist;
wobei die Schutzkante (150) an der ersten Deckschicht (110) befestigt ist und sich in einer Umfangsrichtung (102) der Sandwichplatte (100) entlang mindestens eines Abschnitts der Seitenfläche erstreckt und dadurch die die Außenkante (105) bildende Seitenkante mindestens teilweise gegen einen Zugang von außen abdeckt;
wobei die Schutzkante (150) einen ersten Schenkel (151) und einen zweiten Schenkel (152) aufweist;
wobei der erste Schenkel (151) über einen Biegeradius (153) in den zweiten Schenkel (152) übergeht;
wobei der erste Schenkel (151) in einem Überlappbereich (155) auf der ersten Deckschicht (110) flächig aufliegt;
wobei der zweite Schenkel (152) sich entlang der die Außenkante (105) bildenden Seitenfläche erstreckt;
wobei die Sandwichplatte (100) an der Außenkante (105) eine Schräge (125) aufweist, welche ausgehend von der ersten Deckschicht (110) nahe dem Biegeradius (153) gebildet ist.

2. Sandwichplattenanordnung (10) nach Anspruch 1,
wobei der erste Schenkel (151) in dem Überlappbereich (155) mit der ersten Deckschicht (110) verklebt ist.

3. Sandwichplattenanordnung (10) nach Anspruch 1 oder 2,
wobei der zweite Schenkel (152) sich in einer Erstreckungsrichtung von der ersten Deckschicht (110) zu der zweiten Deckschicht (120) erstreckt und eine Länge des zweiten Schenkels (152) in dieser Erstreckungsrichtung geringer ist als ein Abstand zwischen der ersten Deckschicht (110) und der zweiten Deckschicht (120).

4. Sandwichplattenanordnung (10) nach einem der Ansprüche 1 bis 3,
wobei der zweite Schenkel (152) um einen lateralen Abstand (157) von der die Außenkante (105) bildenden Seitenfläche beabstandet ist.

5. Sandwichplattenanordnung (10) nach einem der Ansprüche 1 bis 4,
wobei die Sandwichplatte (100) einen verstärkten Endbereich (145) aufweist, wobei der verstärkte Endbereich (145) sich ausgehend von der Außenkante (105) in die Sandwichplatte (100) erstreckt;
wobei der Überlappbereich (155) zwischen dem ersten Schenkel (151) und der ersten Deckschicht (110) den verstärkten Endbereich (145) teilweise oder vollständig überlappt.

6. Sandwichplattenanordnung (10) nach Anspruch 5,
wobei die Sandwichplatte (100) in dem verstärkten Endbereich (145) ein Sackloch (147) aufweist;
wobei das Sackloch (147) sich ausgehend von der zweiten Deckschicht (120) in die Kernschicht (130) erstreckt;
wobei ein Insert (160) in dem Sackloch (147) angeordnet und befestigt ist.

7. Sandwichplattenanordnung (10) nach einem der voranstehenden Ansprüche,
wobei die Schutzkante (150) ein metallisches Material oder einen Kunststoff aufweist.

8. Sandwichplattenanordnung (10) nach einem der voranstehenden Ansprüche, wobei die Schutzkante (150) einstückig ausgestaltet ist.
